# EUROPEAN PATENT SPECIFICATION

(11) **EP 3 014 476 B1**
(45) Date of publication and mention of the grant of the patent: **07.11.2018**
(21) Application number: 14817331.3
(22) Date of filing: 23.06.2014
(51) Int. Cl.: G06F 17/30

(54) **USING MOVEMENT PATTERNS TO ANTICIPATE USER EXPECTATIONS**
VERWENDUNG VON BEWEGUNGSMUSTERN ZUR ANTIZIPIERUNG VON BENUTZERERWARTUNGEN
UTILISATION DE MOTIFS DE MOUVEMENT POUR ANTICIPER LES ATTENTES D'UN UTILISATEUR

(30) Priority: 24.06.2013 US 201313925430
(43) Date of publication of application: 04.05.2016
(73) Proprietor: Amazon Technologies, Inc., Reno, NV 89507 (US); Dolbakian, Levon, Seattle, Washington 98109-5210 (US); Kiraly, Kenneth Paul, Seattle, Washington 98109-5210 (US); Sridharan, Srinivasan, Seattle, Washington 98109-5210 (US); Awad, Nadim, Seattle, Washington 98109-5210 (US); Keljo, Jonathan White, Seattle, Washington 98109-5210 (US); Froment, Arnaud Marie, Seattle, Washington 98109-5210 (US); Dumont, Michael David, Seattle, Washington 98109-5210 (US)
(72) Inventor: DOLBAKIAN, Levon, Seattle, Washington 98109-5210 (US); KIRALY, Kenneth Paul, Seattle, Washington 98109-5210 (US); SRIDHARAN, Srinivasan, Seattle, Washington 98109-5210 (US); AWAD, Nadim, Seattle, Washington 98109-5210 (US); KELJO, Jonathan White, Seattle, Washington 98109-5210 (US); FROMENT, Arnaud Marie, Seattle, Washington 98109-5210 (US); DUMONT, Michael David, Seattle, Washington 98109-5210 (US)
(74) Representative: D Young & Co LLP
(86) International application number: PCT/US2014/043588
(87) International publication number: WO 2014/209844

(56) References cited:
- US-A1- 2002 198 991
- US-A1- 2006 156 209
- US-A1- 2007 032 225
- US-A1- 2010 070 171
- US-A1- 2010 317 371
- US-A1- 2012 290 950

## Description

### BACKGROUND

Handheld electronic devices regular include satellite navigation capability and often include features to determine device orientation or other internal sensors. Some devices have multiple radios, including WiFi and Bluetooth. Many also provide a graphical user interface (GUI) and touch screen via which the user may interact with the GUI. US 2010/0317371 discloses a context based interaction model for mobile devices.

### BRIEF DESCRIPTION OF DRAWINGS

For a more complete understanding of the present disclosure, reference is now made to the following description taken in conjunction with the accompanying drawings.
FIG. 1 illustrates a system for predicting a user's needs and expectations of a device based upon location and motion patterns.
FIG. 2 is a block diagram conceptually illustrating a device for predicting a user's needs and expectations based upon location and motion patterns.
FIG. 3 illustrates tag data that may be added to mapping data based upon a user's motions and actions.
FIG. 4 illustrates location trace data which over time may be used to generate a map.
FIG. 5 illustrates a graphical user interface that adaptively is modified based upon predictions about a user's needs and expectations for a particular location.
FIG. 6 illustrates an algorithm for adding informational tags to data for a particular location that may later be used to make predictions about a user's needs and expectations.
FIG. 7 illustrates an algorithm for predictively taking action in anticipation of a user's intentions, adaptively modifying data based on a user's actual actions.
FIG. 8 illustrates using image processing to compute an attitude of a device.
FIG. 9 illustrates an example of a computer network for use in accordance with one aspect of the present disclosure.

### DETAILED DESCRIPTION

The invention is set out in the independent claims. Further embodiments are the subject-matter of the dependent claims.

Many mobile devices are capable of collecting data from a variety of on-device motion sensors, such as accelerometers, gyroscopes, magnetometers, etc. By initially determining location data collected by the geographic positioning such as GPS, and using data collected from these on-device motion sensors for inertial navigation, it may make it possible to establish patterns of geographic movements for a user. Eventually, these patterns can be applied to estimate the speed of movement and distance traveled without the need for GPS (or with a minimum of GPS readings). This may be useful when it is not possible to get a good GPS read (e.g., while indoors) or to decrease the power consumption of a device (e.g., by taking fewer GPS reads), as GPS is relatively expensive in terms of power consumption.

By basing calculations off the last known good location reading, inertial data such as acceleration data from three-axis accelerometers, angular velocity data from 3-axis gyroscopes, compass heading data from a 3-axis magnetometer, and gravity vector data obtained from the accelerometers or a dedicated gravity sensor, may be used to determine a direction and speed of movement, and thereby continue to track relative geographic location without GPS or other location solutions which require a network connection.

Inertial data may also be used to identify recurring patterns of physical motion. Inertial navigation may convert raw inertial data into direction and speed, but the results lack the granularity necessary to reliably identify patterns of physical motion experienced by a device, such as the up-and-down motion of a person's gait when running, or distinguish between a person climbing stairs and riding an escalator. By analyzing the inertial data from the sensors to identify physical motion, either alone or in combination with actual or relative geographic data, patterns of motion emerge that may reflect a user's routines. A pattern of repetitious or steady motion that the device is subjected to over a period of time may be computationally modeled, with the model being referred to as a motion signature. Identifying recurring motion signatures, or motion signatures which closely resemble each other, may assist in identifying a user's daily routines and patterns.

By noting how, where, and when a user interacts with a device in the context of their daily routines, it becomes possible to anticipate a user's impending actions and to modify the behavior of the device to aid those actions, or eliminate the need for the user to do anything at all. For example, based on relative coordinates and physical motion, it can be determined that the device (and presumptively the user) is stationary. Other location-centric data may also be useful in this context, such as WiFi service set identifiers (SSIDs) within range. Combined with a pattern of when the user is stationary at these coordinates, a routine emerges, such as when a user sits at their desk at work each day.

As an example, every day while the user is sitting at their desk, the user does a scan of WiFi networks and connects to a particular network. But when coming to and leaving the office, the user does not connect via WiFi. By recognizing that the user will not be interested in WiFi during their commute, the device can pre-emptively turn the WiFi radio off. Upon arrival at the office, the device can turn the network on and attempt to connect to the user's preferred network, modify its user interface to increase the prominence of an icon or button used to control WiFi, or some combination thereof without being prompted by a user each time. Such steps, in addition to making simplifying interactions for the user can considerably extend the battery life of the device, as periodically scanning for known WiFi networks, and other such activities may consume a significant amount of power.

Another example of a user pattern is after the user descends from their upper-story office to the parking garage to get in their car (the descent producing identifiable patterns of physical motion, in addition to an identifiable pattern of location-based movement), they connect their device to the Bluetooth in the automobile. However, in the office, they leave Bluetooth off. Once again, the device can activate the radio automatically when the user's movement indicates that they are on their way to their car, or increase the prominence of the user interface that the device provides the user to control Bluetooth to make it easier for the user to enable Bluetooth.

As another example, as a user walks into their office every morning they check their calendar. In addition to possibly increasing the prominence of the application on the device's user interface (which may not be needed if the application already has a fixed position of prominence on the GUI), the application may be pre-launched in the background to allow it to sync with any new information from the network "cloud" prior to the user opening the application. If the user's daily path prior to launching a cloud-associated application does not ordinarily include network coverage (e.g., WiFi is ordinarily turned off or unavailable until the user walks into their office and launches the application), the device may turn on its wireless radio at an earlier location where in the past the device had access to WiFi, connect where a known network is available, or launch in the background at an earlier point along the user's daily path where network coverage is ordinarily available (e.g., at their home prior to leaving). The application (e.g., calendar) may also be instantiated in the foreground proximate to when and where the user ordinarily launches it.

As another example, when the user gets home, they may use their device as a WiFi-based remote control when watching television. Recognizing this pattern, the device may turn on and connect to the user's home WiFi, and either launch or increase the prominence of device application that serves as the remote control. Pattern and/or location tracking may thus be used to improve a user experience operating a device.

Relative location movement tracking may use preexisting geographic and building maps (e.g., the inside of some shopping malls may be mapped), may use abstract maps built from recorded tracks and traces, or some combination thereof. Even if a mapping service is not available, by tracking user movements over time, an approximate map of a user's "world" may be generated. This location-based approximation may be initialized and/or reconciled with a precision source such as GPS or may exist as an abstract set of pathways.

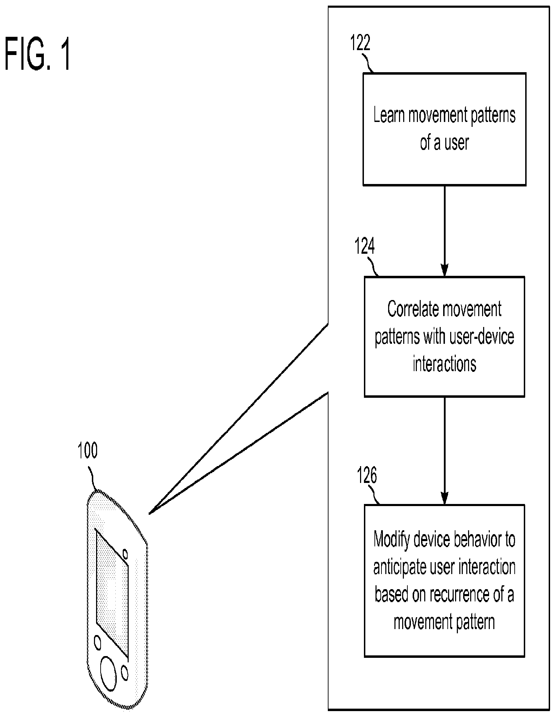

FIG. 1 illustrates a system for modifying device behavior based on a user's movement patterns and routines. The movement patterns of a user of device 100 are learned over time (122). These movement patterns include both movement from location to location, as well as the physical motions experienced by the device 100. Other information such as time and day may be combined with such movement patterns to identify daily routines. User interactions with the device 100 are correlated (124) with these movement patterns, enabling the device 100 to modify its behavior (126) to anticipate user interactions based upon recurrence an identified movement pattern.

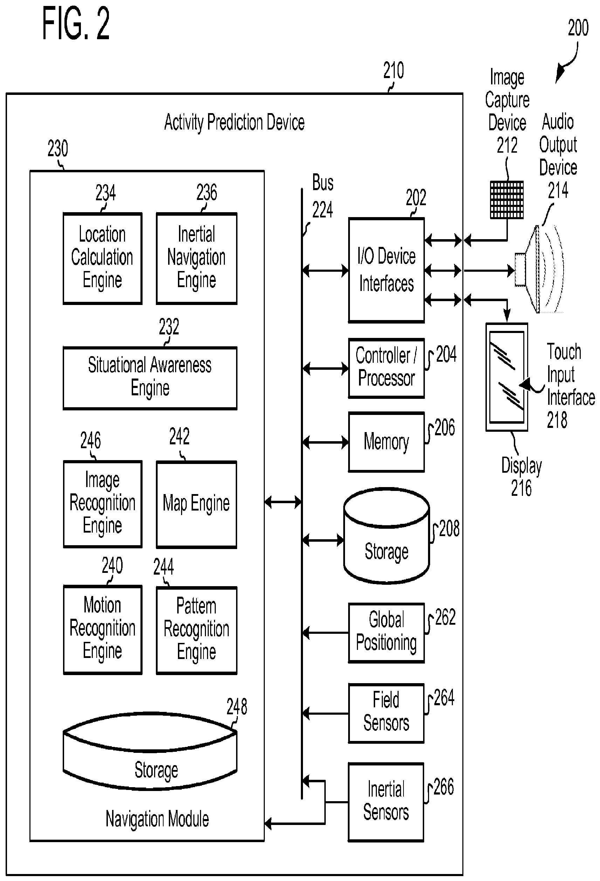

FIG. 2 is a block diagram conceptually illustrating a system 200 including an activity prediction device 210 for anticipating user interactions with the device based on patterns of movement. Some or all of the components of system 200 may be built in to device 100 in FIG. 1. The system 200 may include computer-readable and computer-executable instructions that reside on the activity prediction device 210.

FIG. 2 illustrates a number of components that may be included in the system 200 with the activity prediction device 210. However, other non-illustrated components may also be included. Also, some of the illustrated components may not be present in every device capable of employing the general concepts of the system. Further, some components that are illustrated in the activity prediction device 210 as a single component may also appear multiple times in a single device. For example, the activity prediction device 210 may include multiple input/output device interfaces 202 or multiple controllers/processors 204.

Multiple devices 210 may be employed in a system 200. In such a multi-device system, the devices 210 may include different components for performing different aspects of the process for anticipating user interactions with the device. The multiple devices may include overlapping components. The device 210 as illustrated in FIG. 2 is exemplary, and may be a stand-alone device or may be included, in whole or in part, as a component of a larger device or system.

As illustrated in FIG. 2, the system 200 including the activity prediction device 210 may also include an audio capture device such as a microphone for capturing sound (not shown); an image capture device 212 such as a charge-coupled device (CCD) image sensor or an active-pixel sensor (APS) for capturing an image; an audio output device 214 such as one or more speakers, headphones, or other suitable components for outputting sound; and a display 216 of any suitable technology, such as a liquid crystal display, an organic light emitting diode display, electronic paper, an electrochromic display, a cathode ray tube display, a field emission display, a pico projector or other suitable components for displaying images and/or video. The display 216 may include a touch input interface 218, allowing a user to directly interact with a graphical user interface. The-devices 212 to 218 may each be integrated with the activity prediction device 210 or may be separate.

The activity prediction device 210 may also include an address/data bus 224 for conveying data among components of the device 210. Each component within the device 210 may also be directly connected to other components in addition to (or instead of) being connected to other components across the bus 224.

The device 210 may include a controller/processor 204 that may each include one or more central processing units (CPUs) for processing data and computer-readable instructions, and a memory 206 for storing data and instructions. The memory 206 may include volatile random access memory (RAM), non-volatile read only memory (ROM), and/or other types of memory. The device 210 may also include a data storage component 208, for storing data and instructions. The data storage component 208 may include one or more storage types such as magnetic storage, optical storage, solid-state storage, etc.

The device 210 may also be connected to removable or external memory and/or storage (such as a removable memory card, memory key drive, networked storage, etc.) through the input/output device interfaces 202. Computer instructions for processing by the controller/processor 204 for operating the device 210 and its various components may be executed by the controller/processor 204 and stored in the memory 206, storage 208, an external device, or in memory/storage included in the navigation module 230 discussed below. Alternatively, some or all of the executable instructions may be embedded in hardware or firmware in addition to or instead of software. Thus, the systems, processes, and algorithms disclosed herein may be implemented in various combinations of software, firmware, and/or hardware.

The device 210 includes input/output device interfaces 202. A variety of input/output devices may be included in the device. Example input devices include the audio capture device, the image capture device 212, and the touch input interface 218. Example output devices include the display 216 and the audio output device 214. The input/output device interfaces 202 may also include an interface for an external peripheral device connection such as universal serial bus (USB), FireWire, Thunderbolt or other connection protocol. The input/output device interfaces 202 may also include a network connection such as an Ethernet port, modem, etc. The input/output device interfaces 202 may also include a wireless communication device, such as radio frequency (RF), infrared, Bluetooth, wireless local area network (WLAN) (such as WiFi), or wireless network radio, such as a radio capable of communication with a wireless communication network such as a Long Term Evolution (LTE) network, WiMAX network, 3G network, etc. Through the input/output device interfaces 202, the device 210 may connect to a network, such as the Internet or private network, which may include a distributed computing environment.

The device 210 also includes a global positioning module 262. This module provides the interface with geographic positioning system(s) such as GPS and GLONASS. If the system acquires location-based information using other radio sources, such as mapping services that triangulate off of known SSIDs or using cellular towers, the interface to access such location information may also be integrated with the interface for accessing geographic positioning systems. Although shown as integrated with device 210, some or parts of global positioning module 262 may be external and accessed through input/output device interfaces 202.

The device 210 also includes a field sensor module 264. This module provides directional data, such as a 3-axis magnetometer that measures magnetic fields and serves as a compass, and/or a dedicated gravity sensor to determine up-and-down. Although shown as integrated with device 210, some or parts of field sensor module 264 may be external and accessed through input/output device interfaces 202.

The device 210 also includes inertial sensor module 266. This module provide inertial data, such as data from a 3-axis accelerometer and a 3-axis gyroscope. While any of the components of system 200 may be integrated or separate, or connected via bus 224 or interconnected directly, inertial sensor module 266 is shown connected both by bus 224 and directly to navigation module 230 to emphasize the time-sensitive nature of the real-time data it produces about the device's motion.

The device 210 further includes a navigation module 230 for recording, tracking, and correlating a user's movement and interactions. The module 230 may record, track, and correlate a user's movements and interactions on its own, or work in conjunction with another system that reduces the computational burden on the device 210.

Navigation module 230 includes a situational awareness engine 232 that serves as the main processing element, monitoring a user's movements and device interactions, and applying rules to anticipate a user's expectations and actions.

Situational awareness engine 232 acquires a device's present location from location calculation engine 234. Location calculation engine 234 interacts with the global positioning module 262 to determine a current location. Location calculation engine 234 also interacts with inertial navigation engine 236 to determine relative location when geographic data from the global positioning module 262 is unavailable. When geographic data is available, location calculation engine 234 may provide corrections to inertial navigation engine 236, which comprises a strap-down inertial navigation system. The inertial navigation engine 236 acquires motion and orientation data from the field sensors 264 and inertial sensors 266, outputting a direction and velocity vector to the location calculation engine 234 which then calculates relative location.

The navigation module 230 also include a motion recognition engine 240 which compares real-time motion data from the field sensors 264 and inertial sensors 266 against a set of motion signature models stored in storage 248, providing the situational awareness engine 232 with information about whether the current motion of the device 210 conforms to an identified physical motion model. If repetitious or continuous motion does not conform to an identified physical motion model, the motion recognition engine 240 may use the inertial data to generate a new motion signature, storing the signature with the other motion models in storage 248.

The motion recognition engine 240 enables the device to recognize particular motion patterns such as stairs, running, walking, etc. Conventional techniques to extract a user's activities extrapolate from GPS or inertial navigation traces based on speed and duration, as well as movement pauses. Such techniques present a computational burden and lack refinement as a result of the lack of granularity of extrapolating from such macro-scale data. Unlike the continuous motion data generated by the sensors, navigation vector data is typically periodic (for example, updated and/or recorded every second or so). Thus, conventional inertial navigation data lacks the detail to consistently recognize physical motions, such as the up-and-down motion of a person's gait when running. By applying motion recognition directly to the live data from the sensors, which may for example be sampled at a rate of milliseconds rather than seconds, physical motions may be quickly and accurately modeled and recognized.

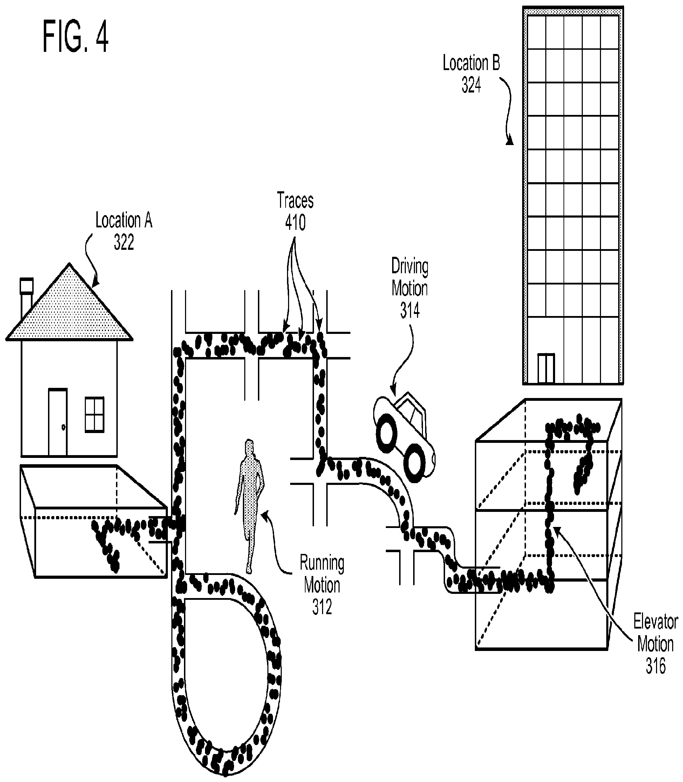

The navigation module 230 also includes a map engine 242. Map engine 242 accesses mapping data in storage 248 to provide situational awareness engine 232 with a map of past user movements. As explained above, this map data may be actual maps, relative location maps, or some combination thereof. Map engine 242 may also build maps over time by recording location trace data and constructing a map from the tracks, as will be discussed below in connection to FIG. 4.

The situational awareness engine 242 annotates the map data with data regarding a user's interactions with the device 210 and motion signature information from the motion recognition engine 240 (e.g., annotates where and when motion that matches a motion signature starts and stops, or annotates periodically to note whether motion corresponds to a motion signature). Other annotations include time and date tags corresponding to a user's past presence at a location, which may be included in the tags added by situational awareness engine 242, or included with location-trace timestamp data that the map engine 242 uses to build the map. These annotations are processed by pattern recognition engine 244, which applies a set of dynamic models (e.g., Bayesian) and filters to identify patterns in the data. When patterns in the data are identified by the pattern recognition engine 244, the situational awareness engine links the rule associated with the model to a location or range of locations on the map. By linking these rules to locations, situational awareness engine 232 may anticipate a user's future expectations of the device 210 at a location, executing the rule when a user's location corresponds to the rules.

The rules may require several additional conditions in addition to location to be true before action is taken, such that the device's motion before or at the location corresponds to a recognized motion or series of motions (e.g., one or more motion signature matches from motion recognition engine 240), that the path to reach the location came from a particular direction or pathway, that movement to the current location began at a specific start location, that the device motion at or preceding the location be above or below a threshold speed, that recurrence at the location corresponds to a particular time(s) or day(s), that a particular interaction by the user with the device be precedent, etc. For example, a rule might require that movement to the current location be on a weekday along a set pathway, with arrival at the current location be preceded by a specific series of motions at earlier locations based on established patterns. If conditions precedent are not satisfied, then the action associated with the rule may not be taken.

Rules may also be set based on the occurrence of certain motions independent of location. For example, if a user takes a same action every time certain motions occur (e.g., playing music when running), then a motion-signature dependent rule may be generated and stored. As another example, if an action is taken at a certain time every day, week, month, etc. (e.g., opening web browser in morning), a location-independent time-based rule may be generated.

Moreover, the "conditions precedent" of a rule may be individually weighted based on the recorded patterns, where the rule is satisfied if a certain threshold is met. For example, a person may take certain action after travelling from A to B, but only during certain times. If a rule template for a pattern includes "time" as a condition precedent, then the ambiguous data (large statistical deviation) may result in the value or range for time being assigned a low statistical weight, but the rule might still be satisfied if the conditions precedent that are satisfied have a cumulative weight exceeding the threshold.

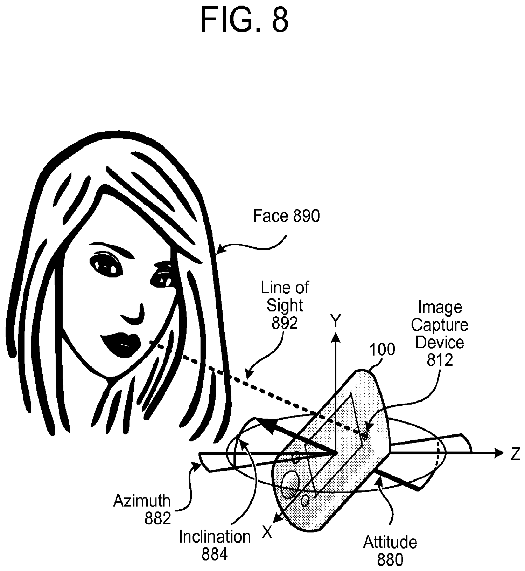

The navigation module also includes an image recognition engine 246, which utilizes the image capture device 212 to determine an orientation or direction of motion of device 210, to augment and/or correct the directional data provided by the inertial navigation engine 236. This will be discussed further below in connection with FIG. 8. For example, when the situational awareness engine 232 determines that the location provided by the location calculation engine 234 originated with inertial data but is off the map, it can use data from image recognition engine 246 to determine the device's orientation relative to the user as a method of verifying the orientation currently being used by the inertial navigation engine. If a mismatch is detected, a correction may be issued to the inertial navigation engine 236 to correct the device orientation currently being used to calculate direction (e.g., sending a "gyro torqueing" signal to the strap-down inertial navigation component computing the attitude vector from the gyroscopic data). The image recognition engine 246 may also determine a direction of motion of the device by comparing a series of images from image capture device 212 to determine a direction of motion.

In operation, the inertial navigation engine 236 provides a direction and velocity vector, from which the location calculation engine 234 calculates the distance and direction travelled to determine relative location. An accelerometer in inertial sensors 266 may measure the acceleration of the device 210 along an axis. A 3-axis accelerometer sensor (commonly found in many current consumer electronic devices) provides acceleration along x, y, z axes relative to the device 210.

The acceleration along the x, y, z axes of the device are dependent on the orientation of the device. In other words, if the device is sitting flat on a table with the screen facing up, pushing the device from the left side so that it moves to the right will produce acceleration along the x axis. However, if the device is turned 90 degrees counter clockwise, pushing the device from the left to right will produce a negative acceleration along the y axis.

Linear acceleration is the acceleration along x, y, z axes without including gravity. Linear acceleration may be calculated as acceleration minus gravity, where gravity is the 3D vector indicating the direction and magnitude of gravity. Gravity can be obtained, for example, from a gravity sensor included in field sensors 264. In the following explanation, acceleration refers to linear acceleration, but this as noted above, this has no impact on the operation since it is easy to calculate linear acceleration from acceleration.

A magnetometer in field sensor 264 measures the ambient magnetic field along the x, y, z axes of the device. Such sensors are conventionally used to provide compass bearings.

A gyroscope in inertial sensors 266 measures the change in rotation over time along the x, y, z axes of the device.

To calculate a distance traveled, consider the example of when a user is carrying a device perpendicular to a tangent of the Earth at the location of the user, with the screen facing the user. This provides an accelerometer change along the x-axis when the device moves left to right; an accelerometer change along the y-axis when the device moves up and down and change along the z-axis when the device moves back and forth.

A person carrying a device with an accelerometer sensor and walking/running at a constant pace will register a cyclical increase/decrease in the acceleration along the 3 axes with each step they take. For the sake of this example, assume the device's orientation is fixed such that the angles of rotation of the device do not change. (Although this is not true for real life actual use adjustment may be made for the change in orientation using a gyro/magnetometer/gravity sensor).

The cycles of the increase/decrease of the acceleration will be shorter when a person is running compared to when they are walking. Moreover the magnitude of acceleration/deceleration is greater when the person is running vs. when they are walking. Further, traveling up or down stairs, in a vehicle, etc. will all create a different accelerator signature.

A person holding the device in their hand will generate cycles that are different than when they are carrying the device in their pocket or in a backpack.

The combinations of locomotion type and the method of carrying the device will generate unique cycles along the x, y, z axes. By applying motion models to this data, motion recognition engine 240 may distinguish between these unique cycles, representing normalized (i.e., axis-independent) repetitive and continuous motion as motion signatures.

Initially using global positioning data (from 262), and then data from inertial navigation engine 236, patterns emerge for a person's movement. In other words, using GPS we can measure the distance "d" a person has traveled over "t" amount of time. During the same amount of time, by recording and/or processing (i.e., processing by motion recognition engine 240) the cycles the person is producing from the accelerometer along each axis "Cx, Cy, Cz," activity patterns emerge.

At a later point, this motion data may also be used to calculate distance. For example, if the user moves producing "Cx, Cy, Cz" cycles for "t" amount of time, based upon past measurements, it can be approximated that the person has traveled "d" distance. Moreover, if the person produces "y" cycles for "2t" time then we can assume that the person has traveled "2d" distance. With inertial data used to measure the distance traveled over time, the average speed of movement can be calculated as: Average Speed equals Distance Traveled divided by Travel Time.

To calculate direction of motion, assume (for the sake of explanation) that the device is held perpendicular to the tangent of the Earth at the location of the user with the screen facing the user and the orientation of the device does not change while data is read from the inertial sensors 266. This means any change in the orientation of the device is in fact a change in the orientation of the user. Assume the user is heading True North.

Based on the above two assumptions, if the gyroscope sensor registers a positive rotation along the y axis we can tell that the user is turning to his/her left (counter clockwise is positive). So a 90 degree rotation along y axis means the user is now facing west. Another -90 degree rotation means the user is back facing north. A further 180 degree rotation means the user is facing south and so on.

Using this information, starting from the last GPS read, the location calculation engine can calculate the location of the user without the need of GPS. A user registering "Cx, Cy, Cz" with 0 rotation means the person is traveling north. A 90 degree positive rotation during which time we get "Cx, Cy, Cz" for "t" seconds means the user traveled "d" distance to the West, etc.

In this explanation, in calculating of the direction of the movement, the assumption was made that the user is heading True North. However, the original orientation of the user can easily be calculated from reading the magnetometer sensor (or other sensor) in field sensors 264. Assuming no other magnetic interference the magnetometer will always be pointing to the magnetic north. So under most circumstances, True North is readily calculated. The original orientation of the user is the direction the magnetometer sensor vector is pointing minus the difference between Magnetic North and True North.

Another assumption in the above explanation is the orientation of the device 210, having assumed that the device starts always with the user holding the device perpendicular to the tangent of the Earth at the location of the user with the screen facing the user. However, the orientation of the device can be accounted for using the gravity vector. If the gravity vector is in the negative Y direction then the device is held portrait with top of the device pointing up. While a gravity vector in the negative X direction means the device is in landscape rotated 90 degrees counter clockwise.

It can also be readily determined if the device's screen is facing the user or if it is facing away from the user. Starting with accelerometer data from the moment the user "unlocks" the screen, it can be assumed that the device is facing the user. In other words, if the device screen is unlocked and it has a negative Z, that means the device is sitting flat on a desk with the screen pointing up. If the device screen is unlocked and it has a negative Y reading from the accelerometer, we can deduce that the device is perpendicular to the floor and the screen is facing the user. Moreover, image recognition engine 246 can take a shots from front and rear facing cameras (e.g., image capture device 212) to determine if the screen is facing the user or away from the user (face detection).

Global positioning sensor (262) data like GPS is not mandatory for the basic functionality of the device 210. Many users keep GPS turned off. However, accelerometer and gyroscope data may be used more frequently for basic functionality (detecting orientation of the device). Accurate position is important when using navigation-like applications. However, applications like weather do not require precise location (close is good-enough for weather). Therefore, instead of waking up the GPS device to pinpoint the user's location, for many applications, inertial data may be used to predict the current location of the user based on the movement patterns over time from the last good read.

Even with the global positioning sensor 262 active, location calculation engine 234 can still use the predictive location from other sensors and only periodically use the GPS to adjust for errors. In other words, the location calculation engine 234 can decrease the number of pings from the GPS sensors and use the predictive location to adjust the user's location.

When indoors, global positioning sensors 262 may not be able to pinpoint the location of a user (since it may not be able to connect to a satellite). By using the last good reading from the global positioning sensors (e.g., just before the user entered the building), and calculating relative location based on inertial navigation data, the map engine 242 can map the location of the user in the building. This information may also be useful for other purposes, such as remembering which entrance to a building a user traveled through, or remembering where the user exited a vehicle (i.e., parked).

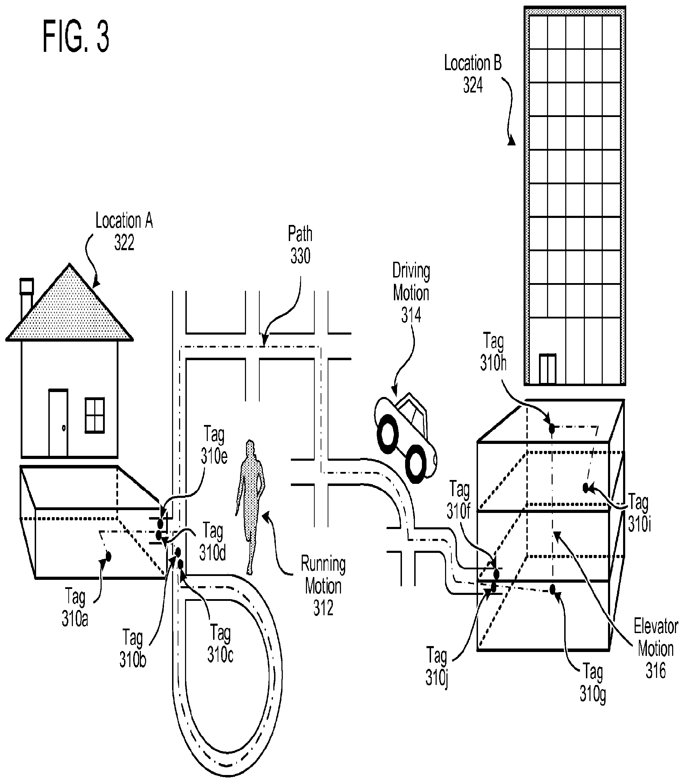

FIG. 3 illustrates patterns of a user's movement along path 330, stored in storage 248, along with various tags. For example, at Location A (322), a tag 310a might indicate that the user uses a remote control application on the device 210 every evening. Tags 310b and 310c might indicate the user starting and stopping a jog (running motion 312), playing music on the device while jogging. Tags 310d, 310e, 310f, and 310j might indicate a user connecting and disconnecting to Bluetooth as they get in and out of their car, and the change of motion associated with getting in and out of the car, and vehicle motion (driving motion 314). Tags 310g and 310h may indicate start and stop of elevator motion 316 at Location B (324). And Tag 310i might correspond to the user enabling WiFi and connecting to a particular network from their desk, or turning on a do-not-disturb feature to suppress certain alerts and notifications. Although these tags are discussed here as start-stop tags, a continuous series of tags may instead be used to periodically tag the pathway with the related motion or interaction.

The path 330 may be built from actual mapping data, and/or be supplemented with relative maps constructed from trace data. FIG. 4 illustrates a series of traces 410 from which the path 330 may be constructed. The traces are periodically recorded, storing data from the location calculation engine together with a timestamp (e.g., date and time). By ignoring outliers in the trace data (e.g., applying a Kalman filter or segmented regression), map engine 242 may construct a map, even if no map is available.

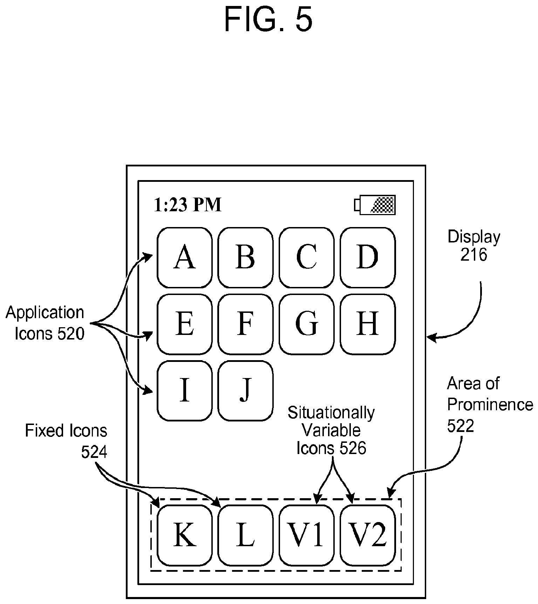

FIG. 5 illustrates a user interface displayed on the display 216. A plurality of icons 520 appear on the screen, as are commonly used on conventional graphical user interfaces. At the bottom of the screen, commonly used applications 524 such as e-mail or a web browser may be fixedly set aside for in a space 522 for prominence. The other icons that are prominently displayed (526) may be determined by the situational awareness engine 232. For example, if rules indicate that when the user heads down a certain pathway, if they start running with headphones inserted, they will want to play music. In accordance with the rules, if the user has not already started the music player, the situational awareness engine 232 may cause the user interface to move or copy the icon for the music player to the prominent position 526 or begin playing music without further user interaction. Similarly, if the user interacts with an application on the device as a remote control when at home, the icon for the remote control application may be given a prominent position 526 when the user is at home. These placements (526) in the area of prominence 522 may change in accordance with the rule sets acted upon by the situational awareness engine 232.

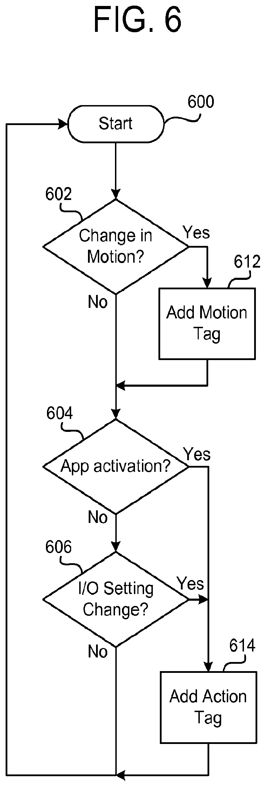

FIG. 6 illustrates a routine performed by the situational awareness engine 232 that governs adding tags to the map. The routine may run in a continuous loop. From the start 600, the motion recognition engine 240 is checked to see if a change of motion has occurred (602). If it has, a motion tag is added (612) to the location on the path 330. A check is also made to see if an application has been active (604) or a change has been made to an input/output setting (606). If so, a tag corresponding to the action (614) is added to the location. Even after a user's patterns are established, these tags may serve as a "buffer" or "queue" of recent activities that may be used as basis for establishing that a rule is satisfied, and serve to reinforce (or negate) the validity of the established pattern.

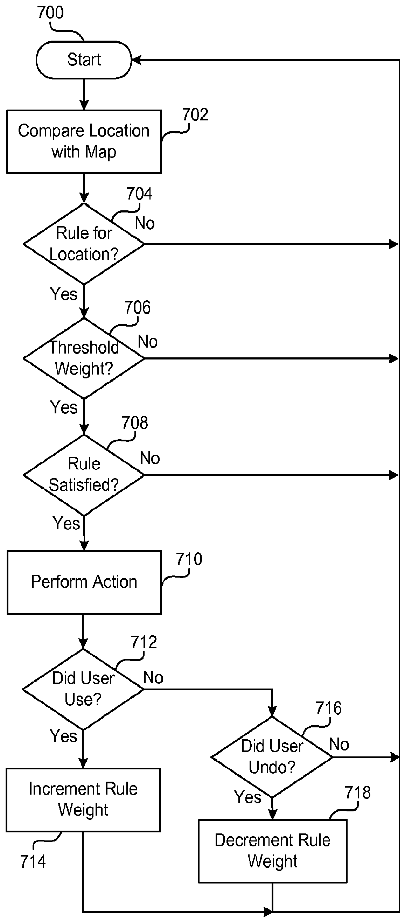

FIG. 7 illustrates a routine performed by situational awareness engine 232 that governs execution of rules. The routine may run as a continuous loop. From the start 700, a comparison (702) is made between the current location provided by location calculation engine 234 and the know path 330 provided by the map engine 242. If a rule is known for the location (704), a check is made to determine (706) whether a stored "weight" associated with a rule is met. By assigning rules "weights," the system is better able to adjust if the pattern recognition engine incorrectly identified a rule set for a location, or if the pattern recognition engine correctly identified a rule set, but the user sometimes does something different. When a rule falls below a threshold, the pattern recognition engine may reevaluate the rule and original tags.

If the threshold weight is satisfied (706 "Yes"), and the rule is satisfied (708 "Yes"), the action indicated by the rule is performed (710), as discussed above. For a duration after the rule is performed, the situational awareness engine 232 watches to see if the user's following interactions make use (712) of the action performed (710), such as whether or not they used an application that was given prominence. If they do (712 "Yes"), the weight on the rule for the location may be incremented (714), as it confirms that the action was consistent with user expectations. Likewise, if the user undoes the action (716 "Yes"), such as turning WiFi off after the rule turned it on, the rule weight may be decremented (718). No action by the user may be treated as inconclusive, meaning that the weight associated with the rule for the location may go unchanged.

Rules may be associated with a particular location or range of locations proximate to where the user routinely takes action, with the situational awareness engine 232 doing a "look-ahead" when comparing (702) the current location to the map, or rules may be associated with an earlier map location or range of locations that routinely precede the user's arrival at the particular location, or a combination thereof. The particular location associated with each rule occurs on the path 330 stored with the map, the path being based on the series of traces 410 from past travel. As the device travels, current location may be periodically compared to the stored path to determine whether current travel is "on" the path. Also, if the device is still recording and/or buffering traces as travel occurs, the path taken to reach a location can be determined retroactively by comparing the established path with the most recent traces, since these recent traces will show how the device arrived at the current location. The device may determine that the current path matches a stored path for purposes of configuring device operation when the device reaches a certain point close enough to the destination of a stored path sufficient to trigger the rule associated with the destination location. This "close enough" point may be referred to as an interim location. The interim location may be associated with a path to the destination location from a particular starting location. A rule for device configuration may be associated with a destination location and/or an interim location on a path to the destination, where the device may be configured according to the rule when the device reaches the interim location while on the path associated with the rule.

If performing a "look-ahead," the situational awareness engine 232 may identify multiple rules that occur at locations on mapped paths radiating from the current location, eliminating rules by refutation as the actual path-of-travel is determined and/or other conditions precedent of the rules go unsatisfied, until either no rule or a satisfied rule remains. For example, returning to FIG. 3, there are three paths 330 that radiate from the entrance to Location A 322: the path inside Location A, the path taken when jogging, and the path to Location B. From the entrance to Location A, based on the stored map data, the situational awareness engine may look ahead and determine that a rule associated with watching television, a rule associated with going running, and a rule associated with arriving at the office are all "potentials" from Location A, and each rule may in fact require being at or travel passing thru Location A as a condition precedent.

In terms of FIG. 7, the look-ahead comparison of the current location with the map might produce multiple "potential" rules at locations on paths radiating from the current location, with 704 to 708 being performed for each of the rules identified on the look-ahead. Addressing these rules individually, the rule associated with watching television may require a particular time-of-day (e.g., evening) and/or that the location be the living room. The rule for going jogging might require running motion 312 as a condition precedent and/or that the path-of-travel be along the loop around the block. And the rule for arriving at the office might require the driving motion 314 and arrival at Location B as a condition precedent. In each case, because the situational awareness engine 232 searched along the stored paths 330 that radiate from the current location for rules tagged to nearby locations that might be a destination, travel along the respective stored path used to identify the rule becomes a de facto condition precedent for satisfying the rule. Presumptively, if travel does not adhere to the path searched to finding the rule, then the rule can be eliminated as a "potential," since the destination of travel does not appear to be to a location associated with the rule.

If the device leaves Location A, the watching television rule is not satisfied (708 "No"), at least because the path-of-travel was not to the living room. If the driving motion 314 is then detected and the path-of-travel is different to where the user goes jogging, the rule associated with going jogging is not satisfied (708 "No"), because the path-of-travel does not match the path used to look-ahead and find the rule (assuming for the purpose of this example that the user action associated with the rule usually occurs along the path and not at the entrance to Location A before the user departs), and the motion does not match the correct motion signature (driving instead of running). So long as the path taken while driving matches the stored path used to identify the rule associated with arrival at the office, the rule is not discarded. The rule may be satisfied (708 "Yes") either in accordance with its own terms (e.g., upon arrival at Location B or at a specified estimated-time-of arrival to Location B), and/or depending upon the heuristics employed by the situational awareness engine, when all other rules have been pruned and the destination being Location B exceeds a particular statistical probability converging on Location B based on stored path travel data (e.g., traces 410).

While this example used Location A as a starting point, a look ahead for potential rules may be performed from any point on an established path 330, and limits may be set for how far forward the situational awareness engine 232 looks for rules, based for example on estimated time-of-travel, distance-of-travel, etc. For example, assume the rule associated with using the television is associated with the location for the living room, the rule for jogging is associated with a map location somewhere along the loop, and the rule for arrival at the office is associated with Location B. If, from the entrance at Location A, the situational awareness engine 232 does a look ahead for any rule that might be applicable in the next 10 minutes (calculating based on the assumption that travel will begin immediately), and based on past travel it usually takes at least 20 minutes to travel to Location B, then even though all three rules appear on paths radiating from the current location, only the first two may be tested (e.g., only the first two rules are produced at 702, since the third rule is regarded as not immediate enough to be tested).

Similarly, if rules are associated with earlier map locations, or a range of locations preceding a destination associated with a user action, the comparison of the current location with the map may likewise produce multiple rules corresponding to the current location. For example, the map location associated with various rules for Location B may be tagged to a street location located along the path 330 prior to reaching Location B 324 (i.e., the rule may be tagged to a point on the path preceding where the action associated with the rule would ordinarily be performed by the user).

Assuming for the sake of explanation that the situational awareness engine is not performing a look-ahead, when the current location of the device matches the street location to which the rules have been tagged, the rules are all tested (708). Depending upon how far forward the rule was tagged (i.e., how far along the stored path in advance of the location where the user is expected to use the device, e.g., how far before Tags 310f, 310i, and 310j), at least a portion of the rule may require travel from the current location along the expected path toward the "action" location (310f, 310i, 310j) before some of the actions associated with the rule are performed. For example, based on tag 310i, the rule may indicate to turn on WiFi and a do-not-disturb feature if the path of travel from the current location where the rule was tagged continues to match the stored path of travel to the user's office, and may indicate that the action should be taken when the estimated-time-of-arrival is one-minute from arriving at the office (or rather, when the location along the path and speed of travel indicate that in one minute the device is estimated to arrive at the location associated with Tag 310i).

While this discussion of associating rules with locations in advance of where the action is to be taken is discussed without the use of a rule "look-ahead," these two methods are entirely compatible, and may be combined. Also, when rules are associated with earlier map locations, preceding a destination associated with a user action, and there are multiple paths to the destination, a location along each of the multiple paths may be associated with a rule, producing a range of locations where a rule may be tested.

In addition, if the navigation module 230 is actively storing periodic traces 410 (as is done during initial device training), or is otherwise buffering navigation data, a rule may require that the path to reach a particular location associated with the rule must have been along a particular path, or originated from or passed through a particular location. For example, a rule associated with arrival at Location B might require that travel originate at Location A and have been along path 330. If the rule is tagged at Location B, then even without using a look-ahead, a determination can be made retrospectively for how the device arrived at Location B by comparing the fresh traces 410 and/or buffered navigation data with the conditions required by the rule,

Whether a look-ahead technique is used or rules are associated with locations that precede a destination, the action associated with the rule may be performed prior to reaching the destination. If a rule requires certain actions (e.g., establishing a network connection, instantiating a background application or service) to precede another (e.g., launching the application in the foreground), the rule itself may specify parameters for how it should be associated with map locations and when an action should be initiated relative to arrival at where the user interacted with the device in the past. For example a rule may specify that it needs a certain lead time to perform operations prior to when it is anticipated a user will engage in an activity, with a user's estimated time of arrival at a location being calculated based on their existing recorded pattern and/or current location and speed. If multiple rules were identified (702), another factor may be whether the rules have been pruned by refutation until only one remains that could potentially be satisfied (e.g., all but one rule resulting in a 708 "No," with the last rule's condition being a "yes" or not yet known).

FIG. 8 illustrates the use of the image capture device(s) 212 to determine orientation of the device relative to the user. While the sensors may accurately detect orientation on the vertical axis (e.g., using the gravity vector) providing an accurate inclination 884, gyroscopic drift may result in an inaccurate azimuth 882. Over time, it may no longer be clear the orientation of the device relative to the user.

By taking an image with image capture device(s) 212/812, processing the image to perform detect the user's face 890 (in image recognition engine 246), and determining the position of the face relative to the line of sight 892 of the image capture device 212/812 (for example, checking inward and outward facing cameras), the attitude 880 of the device 100 relative to the user can be determined. If the user is in motion along a mapped path 330, the direction of travel and attitude of the device 880 may be used to correct the azimuth 882 if there has been drift in the bearing provided by the inertial navigation engine 236.

If no face is apparent, image recognition engine 246 may check for other features. For example, if the device 100 is used as a phone without a hand-free earpiece, the recognition engine 246 can look for an ear, determine whether it is left or right, and thereby approximate position relative to the user. Similar, several images can be compared to determine a direction of motion, thereby providing an approximation of direction of travel. Other image processing routines are contemplated, such as distinguishing ceiling patterns over time when the device 100 is stationary and oriented parallel to the ground (e.g., placed face up or face down on a desk).

Multiple independent coordinate systems may be simultaneously monitored. Depending on the situation, certain coordinate systems may be assigned a more accurate or less accurate "weight," with a system weighted as more accurate being used to retrain a system weighted as less accurate. For example, GPS and inertial navigation may both be used, with GPS weighted as "more accurate" and being used to "correct" and tune the inertial navigation. In certain situations, even if GPS is not active, if the inertial navigation data begins producing traces that are statistically errant based on past travel patterns and map data, GPS may be activated to invalidate and correct (or validate) the inertial data and retrain the inertial navigation system 236. As another example, if magnetometer and gravity vector data is available, and is consistent with orientation data derived from the gyroscopes, the attitude derived from the gyroscopes may be weighted as more accurate than the magnetometer-derived attitude (magnetometers being given less weight for reasons such as their susceptibility to fluctuations caused by proximate sources of magnetism). However, if attitude according to magnetometer is stable, but gyroscope-derived attitude produces errant (off-path) traces, then magnetometer-derived attitude may be given more weight and the gyroscope can be reset accordingly.

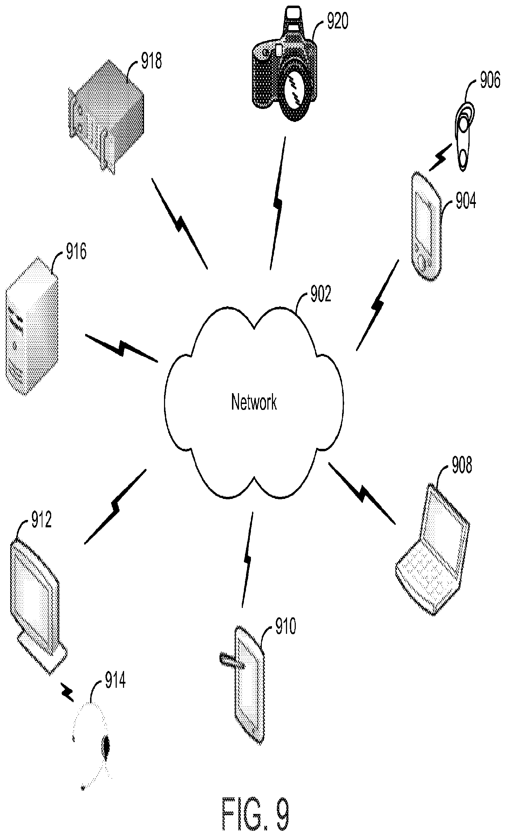

As illustrated in FIG. 9, multiple devices (904-920) may contain components of the system 200 and the devices may be connected over a network 902. Network 902 may include a local or private network or may include a wide network such as the internet. Devices may be connected to the network 902 through either wired or wireless connections. For example, wireless device 904 may be connected to the network 902 through a wireless service provider. Other devices, such as computer 912, may connect to the network 902 through a wired connection. Other devices, such as laptop 908 or tablet computer 910 may be capable of connection to the network 902 using various connection methods including through a wireless service provider, over a WiFi connection, or the like. Networked devices may contain some or all of the components of navigation module 230, components of which may be distributed across the network 902. Input and output devices may be connected to networked devices either through a wired or wireless connection.

In certain system configurations, one device may contain the image capture device 212, global position module 262, field sensors 264, and inertial sensors 266, while another device may contain components of the navigation module 230, such as image recognition engine 246, map engine 242, and pattern recognition engine 244. For example wireless device 904, wireless headset 906, laptop 908, tablet computer 910, headset 914, camera 920 may include the image capture device 212 and sensors, whereas computer 912, wired computer 916, or server 918 may perform some of the processing. Because image and pattern recognition may involve significant computational resources, in terms of both storage and processing power, such split configurations may be employed where the device that performs data acquisition has lower processing capabilities than a remote device. Various configurations of components across distributed computing devices are contemplated.

In certain configurations, the maps and rules created based on the operation of one device may be used to alter the operation of another device associated with a similar user. For example, if a user operates his/her phone to activate a particular application or access a particular wireless network at a particular time of day after traveling a particular path (for example, from a parking lot to his/her office) and one day travels the same path at the same time while carrying his/her tablet computer and it is linked to a same account or user profile, the system may activate the application and/or access the particular wireless network using the tablet computer. In this configuration both the phone and the tablet computer, along with the particular maps and rules, may be associated with the same user.

The above examples are meant to be illustrative. They were chosen to explain the principles of operation and device design and are not intended to be exhaustive or to limit the disclosure. Many modifications and variations of the disclosed operations and design may be apparent to those of skill in the art. Persons having ordinary skill in the field of computers, digital imaging and/or content conversion, should recognize that components and process steps described herein may be interchangeable with other components or steps, or combinations of components or steps, and still achieve the benefits and advantages of the present disclosure. Moreover, it should be apparent to one skilled in the art, that the disclosure may be practiced without some or all of the specific details and steps disclosed herein.

Whether a time, motion, path, or location are approximately the same may be based on among other things the statistical variation in the past data (e.g., the standard deviation of trace data). Conditions precedent of rules may include, among other things, a range of value based upon pass occurrences, as well statistical data.

The foregoing may also be understood in view of the following clauses:
1. A method of modifying operation of an electronic device based on previous operation of the device, comprising:
   determining a first location of a device;
   recording a path taken by the device from the first location to a second location;
   recording operation of the device at the second location, wherein the operation includes a user interaction with the device to activate an application;
   determining, at a later time, that the device is back at the first location;
   determining that the device is on a current path traveling again from the first location to the second location based at least in part on a similarity between the recorded path and the current path, wherein the current path is determined using the device's orientation and acceleration while on the current path; and
   activating the application prior to the device arriving back at the second location in response to determining that the current path from the first location is to the second location.
2. The method of clause 1, further comprising:
   wherein a similarity between the recorded path and the current path is determined by:
   periodically comparing current locations on the current path to a plurality of candidate stored paths that include the first location, wherein the plurality of candidate stored paths includes the recorded path; and
   determining that the current path is similar to the recorded path when the recorded path includes locations on the current path from the first location to an interim location, wherein the interim location is at a point between the first location and the second location on the current path, and wherein the activating the application occurs at the interim location.
3. The method of clause 1, wherein the determining that the device is back at a first location is based at least in part on a global positioning system (GPS)-based measurement detecting the device back at the first location.
4. The method of clause 1, wherein the orientation of the device is determined using a camera on the device to detect a position of the device relative to a direction of travel of a user.
5. A method comprising:
   determining that a current path of travel of a device is similar to a stored path of travel to a first location; and
   prior to arriving at the first location, changing an operation of the device based on a prior user-device interaction at the first location, wherein the changing is based at least in part on determining that the current path of travel is similar to the stored path of travel.
6. The method of clause 5, further comprising, while at a second location prior to traveling to the first location:
   determining that a plurality of candidate stored paths connect to the second location, wherein the plurality of candidate stored paths includes the stored path to the first location; and
   upon travel from the second location, determining that the current path of travel of the device is not similar to any of the plurality of candidate stored paths, other than the stored path of travel to the first location.
7. The method of clause 6, wherein determining that the current path of travel of the device is not similar to one of the plurality of candidate stored paths comprises:
   periodically comparing a current location on the current path to one of the plurality of candidate stored paths; and
   determining that the current path is not similar to the one of the plurality of candidate stored paths if the current location deviates from the one of the plurality of candidate stored paths.
8. The method of clause 5, wherein changing the operation of the device is further based at least in part on whether the current path originated from a same second location as the stored path.
9. The method of clause 8, further comprising:
   periodically storing a current location; and
   determining whether the current path originated from the same second location as the stored path by comparing the stored path with locations that were periodically stored while on the current path to determine if the current path leads back to the second location.
10. The method of clause 8, wherein the current path of travel is determined based at least in part on changes in orientation and acceleration experienced by the device after leaving the second location.
11. The method of clause 10, wherein the orientation of the device is determined in part based on using a camera on the device to determine an attitude of the device relative to a user of the device, the orientation being adjusted based on the attitude and a direction of movement.
12. The method of clause 5, wherein changing the operation of the device is further based at least in part on a determination that a pattern of motion experienced by the device along the current path is similar to a stored pattern of motion associated with the stored path.
13. The method of clause 5, wherein changing the operation of the device is further based at least in part on a determination that an estimated time of day of arrival of the device at the first location is similar to a time of day associated with the prior user-device interaction.
14. The method of clause 5, wherein the prior user-device interaction was an interaction between a different device and a user of the device on the current path.
15. A computing device, comprising:
   at least one processor;
   a memory device including instructions operable to be executed by the at least one processor to perform a set of actions, configuring the at least one processor:
      to determine that a current path of travel of a device is similar to a stored path of travel to a first location; and
      prior to arriving at the first location, to change an operation of the device based on a prior user-device interaction at the first location, wherein the changing is based at least in part on determining that the current path of travel is similar to the stored path of travel.
16. The computing device of clause 15, wherein the at least one processor is further configured, while at a second location prior to traveling to the first location:
   to determine that a plurality of candidate stored paths connect to the second location, wherein the plurality of candidate stored paths includes the stored path to the first location; and
   upon travel from the second location, to determine that the current path of travel of the device is not similar to any of the plurality of candidate stored paths, other than the stored path of travel to the first location.
17. The computing device of clause 16, wherein the at least one processor configured to determine that the current path of travel of the device is not similar to one of the plurality of candidate stored paths comprises the at least one processor configured:
   to periodically compare a current location on the current path to one of the plurality of candidate stored paths; and
   to determine that the current path is not similar to the one of the plurality of candidate stored paths if the current location deviates from the one of the plurality of candidate stored paths.
18. The computing device of clause 15, wherein the at least one processor is configured to change the operation of the device is further based at least in part on whether the current path originated from a same second location as the stored path.
19. The computing device of clause 18, wherein the at least one processor is further configured:
   to periodically store a current location; and
   to determine whether the current path originated from the same second location as the stored path by comparing the stored path with locations that were periodically stored while on the current path to determine if the current path leads back to the second location.
20. The computing device of clause 18, wherein the at least one processor is further configured to determine the current path of travel based at least in part on changes in orientation and acceleration experienced by the device after leaving the second location.
21. The computing device of clause 20, wherein the at least one processor is further configured to determine the orientation of the device based on using a camera on the device to determine an attitude of the device relative to a user of the device, the orientation being adjusted based on the attitude and a direction of movement.
22. The computing device of clause 15, wherein the at least one processor is further configured to change the operation of the device further based at least in part on a determination that a pattern of motion experienced by the device along the current path is similar to a stored pattern of motion associated with the stored path.
23. The computing device of clause 15, wherein the at least one processor is further configured to change the operation of the device further based at least in part on a determination that an estimated time of day of arrival of the device at the first location is similar to a time of day associated with the prior user-device interaction.
24. The computing device of clause 15, wherein the prior user-device interaction was an interaction between a different device and a user of the device on the current path.

The disclosed processes, operations and algorithms may be implemented as a computer method, a system or as an article of manufacture such as a memory device or non-transitory computer readable storage medium. The computer readable storage medium may be readable by a computer and may comprise instructions for causing a computer or other device to perform processes described in the present disclosure. The computer readable storage medium may be implemented by a volatile computer memory, non-volatile computer memory, hard drive, solid-state memory, flash drive, removable disk and/or other media.

The concepts disclosed herein may be applied within a number of different devices and computer systems, including, for example, digital cameras, cellular phones, personal digital assistants (PDAs), tablet computers, wearable computers with a head-mounted camera and display, other mobile devices, etc. For example, the device 210 may also be a component of other devices or systems that may anticipate user interactions based on patterns of movement, including a general-purpose computing systems, server-client computing systems, mainframe computing systems, telephone computing systems, laptop computers, etc.

As used in this disclosure, the term "a" or "one" may include one or more items unless specifically stated otherwise. Further, the phrase "based on" is intended to mean "based at least in part on" unless specifically stated otherwise.

## Claims

1. A method comprising:
determining that a current path of travel of a device (200) to a second location (324) is similar to a stored path of travel of the device from a first location (322) to the second location, the determining based at least in part on the device's orientation and motion while on the current path;
deactivating a wireless input-output device interface (202); and
activating, prior to arriving at the second location, the wireless input-output device interface based on the wireless input-output device interface being previously activated by a prior user-device interaction at the second location,
wherein the deactivating and activating are based at least in part on determining that the current path of travel is similar to the stored path of travel.

2. The method of claim 1, further comprising, while at the first location prior to traveling to the second location:
determining that a plurality of candidate stored paths connect to the first location, wherein the plurality of candidate stored paths includes the stored path to the second location; and
upon travel from the first location, determining that the current path of travel of the device is not similar to any of the plurality of candidate stored paths, other than the stored path of travel to the second location.

3. The method of claim 2, wherein determining that the current path of travel of the device is not similar to one of the plurality of candidate stored paths comprises:
periodically comparing a current location on the current path to one of the plurality of candidate stored paths; and
determining that the current path is not similar to the one of the plurality of candidate stored paths if the current location deviates from the one of the plurality of candidate stored paths.

4. The method of any one of the preceding claims, wherein the deactivating and activating of the wireless input-output device interface is further based at least in part on whether the current path originated from the same first location as the stored path.

5. The method of claim 4, further comprising:
periodically storing a current location; and
determining whether the current path originated from the same first location as the stored path by comparing the stored path with locations that were periodically stored while on the current path to determine if the current path leads back to the first location.

6. The method of claim 4, wherein the current path of travel is determined based at least in part on changes in acceleration experienced by the device after leaving the first location, and wherein the orientation of the device is determined in part based on using a camera on the device to determine an attitude of the device relative to a user of the device, the orientation being adjusted based on the attitude and a direction of movement.

7. The method of any one of the preceding claims, wherein the deactivating and activating of the wireless input-output device interface is further based at least in part on:
a determination that a pattern of motion experienced by the device along the current path is similar to a stored pattern of motion associated with the stored path; or
a determination that an estimated time of day of arrival of the device at the second location is similar to a time of day associated with the prior user-device interaction.

8. The method of any one of the preceding claims, wherein the prior user-device interaction was an interaction between a different device and a user of the device on the current path.

9. A computing device (200), comprising:
at least one processor (204);
a memory device (206) including instructions operable to be executed by the at least one processor to perform a set of actions, configuring the at least one processor:
to determine that a current path of travel of a device is similar to a stored path of travel of the device from a first location to a second location, the determining based at least in part on the device's orientation and motion while on the current path;
to deactivate a wireless input-output device interface (202); and
to activate, prior to arriving at the second location, the wireless input-output device interface based on the wireless input-output device interface being previously activated by a prior user-device interaction at the second location,
wherein the deactivating and activating are based at least in part on determining that the current path of travel is similar to the stored path of travel.

10. The computing device of claim 9, wherein the at least one processor is further configured, while at the first location prior to traveling to the second location:
to determine that a plurality of candidate stored paths connect to the first location, wherein the plurality of candidate stored paths includes the stored path to the second location; and
upon travel from the first location, to determine that the current path of travel of the device is not similar to any of the plurality of candidate stored paths, other than the stored path of travel to the second location.

11. The computing device of claim 10, wherein the at least one processor configured to determine that the current path of travel of the device is not similar to one of the plurality of candidate stored paths comprises the at least one processor configured:
to periodically compare a current location on the current path to one of the plurality of candidate stored paths; and
to determine that the current path is not similar to the one of the plurality of candidate stored paths if the current location deviates from the one of the plurality of candidate stored paths.

12. The computing device of any one of claims 9-11, wherein the at least one processor is configured to deactivate and activate the wireless input-output device interface is further based at least in part on whether the current path originated from a same first location as the stored path.

13. The computing device of claim 12, wherein the at least one processor is further configured:
to periodically store a current location; and
to determine whether the current path originated from the same first location as the stored path by comparing the stored path with locations that were periodically stored while on the current path to determine if the current path leads back to the first location.

14. The computing device of claim 12 or claim 13, wherein the at least one processor is further configured to determine the current path of travel based at least in part on changes in orientation and acceleration experienced by the device after leaving the first location, and
wherein the at least one processor is further configured to determine the orientation of the device based on using a camera on the device to determine an attitude of the device relative to a user of the device, the orientation being adjusted based on the attitude and a direction of movement.

15. The computing device of any one of claims 9-14, wherein the at least one processor is further configured to deactivate and activate the wireless input-output device interface further based at least in part on:
a determination that a pattern of motion experienced by the device along the current path is similar to a stored pattern of motion associated with the stored path; or
a determination that an estimated time of day of arrival of the device at the second location is similar to a time of day associated with the prior user-device interaction.

## Patentansprüche

1. Verfahren, umfassend:
Bestimmen, dass ein momentaner von einem Gerät zurückgelegter Weg (200) zu einem zweiten Standort (324) einem gespeicherten vom Gerät zurückgelegten Weg von einem ersten Standort (322) zum zweiten Standort ähnlich ist, wobei das Bestimmen mindestens teilweise auf der Ausrichtung und der Bewegung des Geräts auf dem momentanen Weg basiert;
Deaktivieren einer Drahtlos-Eingabe-Ausgabe-Geräteschnittstelle (202); und
vor dem Ankommen am zweiten Standort Aktivieren der Drahtlos-Eingabe-Ausgabe-Geräteschnittstelle basierend darauf, dass die Drahtlos-Eingabe-Ausgabe-Geräteschnittstelle zuvor durch eine vorherige Benutzer-Gerät-Interaktion am zweiten Standort aktiviert wurde,
wobei das Deaktivieren und das Aktivieren mindestens teilweise auf dem Bestimmen, dass der momentane zurückgelegte Weg dem gespeicherten zurückgelegten Weg ähnlich ist, basieren.

2. Verfahren nach Anspruch 1, ferner umfassend am ersten Standort vor dem Zurücklegen einer Strecke zum zweiten Standort:
Bestimmen, dass eine Vielzahl von in Frage kommenden gespeicherten Wegen mit dem ersten Standort verbunden ist, wobei die Vielzahl von in Frage kommenden gespeicherten Wegen den gespeicherten Weg zum zweiten Standort enthält; und
nach dem Zurücklegen einer Strecke vom ersten Standort Bestimmen, dass der momentane vom Gerät zurückgelegte Weg außer dem gespeicherten zurückgelegten Weg zum zweiten Standort keinem der Vielzahl von in Frage kommenden gespeicherten Wegen ähnlich ist.

3. Verfahren nach Anspruch 2, wobei das Bestimmen, dass der momentane vom Gerät zurückgelegte Weg keinem der Vielzahl von in Frage kommenden gespeicherten Wegen ähnlich ist, Folgendes umfasst:
periodisches Vergleichen eines momentanen Standorts auf dem momentanen Weg mit einem der Vielzahl von in Frage kommenden gespeicherten Wegen; und
Bestimmen, dass der momentane Weg dem einen der Vielzahl von in Frage kommenden gespeicherten Wegen nicht ähnlich ist, wenn der momentane Standort von dem einen der Vielzahl von in Frage kommenden gespeicherten Wegen abweicht.

4. Verfahren nach einem der vorhergehenden Ansprüche, wobei das Deaktivieren und das Aktivieren der Drahtlos-Eingabe-Ausgabe-Geräteschnittstelle ferner mindestens teilweise darauf basiert, ob der momentane Weg von demselben ersten Standort wie der gespeicherte Weg ausgegangen ist.

5. Verfahren nach Anspruch 4, ferner umfassend:
periodisches Speichern eines momentanen Standorts; und
Bestimmen, ob der momentane Weg von demselben ersten Standort wie der gespeicherte Weg ausgegangen ist, durch Vergleichen des gespeicherten Wegs mit Standorten, die periodisch auf dem momentanen Weg gespeichert wurden, um zu bestimmen, ob der momentane Weg zum ersten Standort zurückführt.

6. Verfahren nach Anspruch 4, wobei der momentane zurückgelegte Weg mindestens teilweise basierend auf Änderungen in der Beschleunigung, von denen das Gerät betroffen ist, nachdem es den ersten Standort verlassen hat, bestimmt wird und wobei die Ausrichtung des Geräts mindestens teilweise basierend auf der Nutzung einer Kamera am Gerät bestimmt wird, um eine Lage des Geräts relativ zu einem Benutzer des Geräts zu bestimmen, wobei die Ausrichtung basierend auf der Lage und einer Bewegungsrichtung angepasst wird.

7. Verfahren nach einem der vorhergehenden Ansprüche, wobei das Deaktivieren und das Aktivieren der Drahtlos-Eingabe-Ausgabe-Geräteschnittstelle ferner mindestens teilweise auf Folgendem basiert:
einer Bestimmung, dass ein Bewegungsmuster, von dem das Gerät betroffen ist, entlang des momentanen Wegs einem gespeicherten Bewegungsmuster, das mit dem gespeicherten Weg assoziiert ist, ähnlich ist; oder
einer Bestimmung, dass eine geschätzte Tageszeit der Ankunft des Geräts am zweiten Standort einer mit der vorherigen Benutzer-Gerät-Interaktion assoziierten Tageszeit ähnlich ist.

8. Verfahren nach einem der vorhergehenden Ansprüche, wobei die vorherige Benutzer-Gerät-Interaktion eine Interaktion zwischen einem anderen Gerät und einem Benutzer des Geräts auf dem momentanen Weg war.

9. Computergerät (200), umfassend:
mindestens einen Prozessor (204);
ein Speichergerät (206), das Anweisungen enthält, die dazu dienen, um durch den mindestens einen Prozessor zur Durchführung einer Menge von Aktionen ausgeführt zu werden, wodurch der mindestens eine Prozessor für Folgendes konfiguriert wird:
Bestimmen, dass ein momentaner von einem Gerät zurückgelegter Weg einem gespeicherten vom Gerät zurückgelegten Weg von einem ersten Standort zu einem zweiten Standort ähnlich ist, wobei das Bestimmen mindestens teilweise auf der Ausrichtung und der Bewegung des Geräts auf dem momentanen Weg basiert;
Deaktivieren einer Drahtlos-Eingabe-Ausgabe-Geräteschnittstelle (202); und
vor dem Ankommen am zweiten Standort Aktivieren der Drahtlos-Eingabe-Ausgabe-Geräteschnittstelle basierend darauf, dass die Drahtlos-Eingabe-Ausgabe-Geräteschnittstelle zuvor durch eine vorherige Benutzer-Gerät-Interaktion am zweiten Standort aktiviert wurde,
wobei das Deaktivieren und das Aktivieren mindestens teilweise auf dem Bestimmen, dass der momentane zurückgelegte Weg dem gespeicherten zurückgelegten Weg ähnlich ist, basieren.

10. Computergerät nach Anspruch 9, wobei der mindestens eine Prozessor ferner für Folgendes am ersten Standort und vor dem Zurücklegen einer Strecke zum zweiten Standort konfiguriert ist:
Bestimmen, dass eine Vielzahl von in Frage kommenden gespeicherten Wegen mit dem ersten Standort verbunden ist, wobei die Vielzahl von in Frage kommenden gespeicherten Wegen den gespeicherten Weg zum zweiten Standort enthält; und
nach dem Zurücklegen einer Strecke vom ersten Standort Bestimmen, dass der momentane vom Gerät zurückgelegte Weg außer dem gespeicherten zurückgelegten Weg zum zweiten Standort keinem der Vielzahl von in Frage kommenden gespeicherten Wegen ähnlich ist.

11. Computergerät nach Anspruch 10, wobei der mindestens eine Prozessor, der konfiguriert ist, um zu bestimmen, dass der momentane vom Gerät zurückgelegte Weg keinem der Vielzahl von in Frage kommenden gespeicherten Wegen ähnlich ist, den mindestens einen Prozessor umfasst, der für Folgendes konfiguriert ist:
periodisches Vergleichen eines momentanen Standorts auf dem momentanen Weg mit einem der Vielzahl von in Frage kommenden gespeicherten Wegen; und
Bestimmen, dass der momentane Weg dem einen der Vielzahl von in Frage kommenden gespeicherten Wegen nicht ähnlich ist, wenn der momentane Standort von dem einen der Vielzahl von in Frage kommenden gespeicherten Wegen abweicht.

12. Computergerät nach einem der Ansprüche 9-11, wobei der mindestens eine Prozessor konfiguriert ist, um die Drahtlos-Eingabe-Ausgabe-Geräteschnittstelle zu deaktivieren und zu aktivieren, ferner mindestens teilweise darauf basiert, ob der momentane Weg von einem selben ersten Standort wie der gespeicherte Weg ausgegangen ist.

13. Computergerät nach Anspruch 12, wobei der mindestens eine Prozessor ferner für Folgendes konfiguriert ist:
periodisches Speichern eines momentanen Standorts; und
Bestimmen, ob der momentane Weg von demselben ersten Standort wie der gespeicherte Weg ausgegangen ist, durch Vergleichen des gespeicherten Wegs mit Standorten, die periodisch auf dem momentanen Weg gespeichert wurden, um zu bestimmen, ob der momentane Weg zum ersten Standort zurückführt.

14. Computergerät nach Anspruch 12 oder Anspruch 13, wobei der mindestens eine Prozessor ferner konfiguriert ist, um den momentanen zurückgelegten Weg mindestens teilweise basierend auf Änderungen in der Ausrichtung und der Beschleunigung, von denen das Gerät betroffen ist, nachdem es den ersten Standort verlassen hat, zu bestimmen, und
wobei der mindestens eine Prozessor ferner konfiguriert ist, um die Ausrichtung des Geräts basierend auf der Nutzung einer Kamera am Gerät zu bestimmen, um eine Lage des Geräts relativ zu einem Benutzer des Geräts zu bestimmen, wobei die Ausrichtung basierend auf der Lage und einer Bewegungsrichtung angepasst wird.

15. Computergerät nach einem der Ansprüche 9-14, wobei der mindestens eine Prozessor ferner konfiguriert ist, um die Drahtlos-Eingabe-Ausgabe-Geräteschnittstelle ferner mindestens teilweise basierend auf Folgendem zu deaktivieren und zu aktivieren:
einer Bestimmung, dass ein Bewegungsmuster, von dem das Gerät betroffen ist, entlang des momentanen Wegs einem gespeicherten Bewegungsmuster, das mit dem gespeicherten Weg assoziiert ist, ähnlich ist; oder
einer Bestimmung, dass eine geschätzte Tageszeit der Ankunft des Geräts am zweiten Standort einer mit der vorherigen Benutzer-Gerät-Interaktion assoziierten Tageszeit ähnlich ist.

## Revendications

1. Procédé, comprenant :
la détermination qu'un parcours actuel d'un dispositif (200) jusqu'à un deuxième emplacement (324) est similaire à un parcours enregistré du dispositif depuis un premier emplacement (322) jusqu'au deuxième emplacement, la détermination étant basée au moins en partie sur l'orientation et le mouvement du dispositif sur le parcours actuel ;
la désactivation d'une interface de dispositif d'entrée-sortie sans fil (202) ; et
l'activation, avant l'arrivée au deuxième emplacement, de l'interface de dispositif d'entrée-sortie sans fil sur la base d'une activation préalable de l'interface de dispositif d'entrée-sortie sans fil par une interaction utilisateur-dispositif antérieure au deuxième emplacement,
la désactivation et l'activation étant basées au moins en partie sur la détermination que le parcours actuel est similaire au parcours enregistré.

2. Procédé selon la revendication 1, comprenant en outre, au premier emplacement, avant le déplacement vers le deuxième emplacement :
la détermination qu'une pluralité de parcours enregistrés candidats se rattachent au premier emplacement, la pluralité de parcours enregistrés candidats comportant le parcours enregistré jusqu'au deuxième emplacement ; et
lors d'un déplacement depuis le premier emplacement, la détermination que le parcours actuel du dispositif n'est pas similaire à l'un quelconque de la pluralité de parcours enregistrés candidats, à l'exception du parcours enregistré jusqu'au deuxième emplacement.

3. Procédé selon la revendication 2, dans lequel la détermination que le parcours actuel du dispositif n'est pas similaire à l'un de la pluralité de parcours enregistrés candidats comprend :
la comparaison périodique d'un emplacement actuel sur le parcours actuel à l'un de la pluralité de parcours enregistrés candidats ; et
la détermination que le parcours actuel n'est pas similaire à l'un de la pluralité de parcours enregistrés candidats si l'emplacement actuel s'écarte de l'un de la pluralité de parcours enregistrés candidats.

4. Procédé selon l'une quelconque des revendications précédentes, dans lequel la désactivation et l'activation de l'interface de dispositif d'entrée-sortie sans fil sont basées en outre au moins en partie sur le fait que le parcours actuel partait ou non du même premier emplacement que celui du parcours enregistré.

5. Procédé selon la revendication 4, comprenant en outre :
l'enregistrement périodique d'un emplacement actuel ; et
la détermination si le parcours actuel partait ou non du même premier emplacement que celui du parcours enregistré par comparaison du parcours enregistré à des emplacements qui ont été enregistrés périodiquement sur le parcours actuel dans le but de déterminer si le parcours actuel ramène au premier emplacement.

6. Procédé selon la revendication 4, dans lequel le parcours actuel est déterminé sur la base au moins en partie de changements d'accélération auxquels le dispositif est soumis après qu'il a quitté le premier emplacement, et dans lequel l'orientation du dispositif est déterminée en partie sur la base de l'utilisation d'une caméra sur le dispositif dans le but de déterminer une attitude du dispositif par rapport à un utilisateur du dispositif, l'orientation étant corrigée sur la base de l'attitude et d'une direction de mouvement.

7. Procédé selon l'une quelconque des revendications précédentes, dans lequel la désactivation et l'activation de l'interface de dispositif d'entrée-sortie sans fil sont basées en outre au moins en partie sur :
une détermination qu'un type de mouvement auquel le dispositif est soumis le long du parcours actuel est similaire à un type de mouvement enregistré associé au parcours enregistré ; ou
une détermination qu'une heure du jour estimée d'arrivée du dispositif au deuxième emplacement est similaire à une heure du jour associée à l'interaction utilisateur-dispositif antérieure.

8. Procédé selon l'une quelconque des revendications précédentes, dans lequel l'interaction utilisateur-dispositif antérieure était une interaction entre un dispositif différent et un utilisateur du dispositif sur le parcours actuel.

9. Dispositif informatique (200), comprenant :
au moins un processeur (204) ;
un dispositif de mémoire (206) comportant des instructions susceptibles d'être exécutées par l'au moins un processeur pour mettre en oeuvre un ensemble d'actions, configurant l'au moins un processeur :
pour déterminer qu'un parcours actuel d'un dispositif est similaire à un parcours enregistré du dispositif depuis un premier emplacement jusqu'à un deuxième emplacement, la détermination étant basée au moins en partie sur l'orientation et le mouvement du dispositif sur le parcours actuel ;
pour désactiver une interface de dispositif d'entrée-sortie sans fil (202) ; et
pour activer, avant l'arrivée au deuxième emplacement, l'interface de dispositif d'entrée-sortie sans fil sur la base d'une activation préalable de l'interface de dispositif d'entrée-sortie sans fil par une interaction utilisateur-dispositif antérieure au deuxième emplacement,
la désactivation et l'activation étant basées au moins en partie sur la détermination que le parcours actuel est similaire au parcours enregistré.

10. Dispositif informatique selon la revendication 9, dans lequel l'au moins un processeur est configuré en outre, au premier emplacement, avant le déplacement vers le deuxième emplacement :
pour déterminer qu'une pluralité de parcours enregistrés candidats se rattachent au premier emplacement, la pluralité de parcours enregistrés candidats comportant le parcours enregistré jusqu'au deuxième emplacement ; et
lors d'un déplacement depuis le premier emplacement, pour déterminer que le parcours actuel du dispositif n'est pas similaire à l'un quelconque de la pluralité de parcours enregistrés candidats, à l'exception du parcours enregistré jusqu'au deuxième emplacement.

11. Dispositif informatique selon la revendication 10, dans lequel le fait que l'au moins un processeur est configuré pour déterminer que le parcours actuel du dispositif n'est pas similaire à l'un de la pluralité de parcours enregistrés candidats comprend le fait que l'au moins un processeur est configuré :
pour comparer périodiquement un emplacement actuel sur le parcours actuel à l'un de la pluralité de parcours enregistrés candidats ; et
pour déterminer que le parcours actuel n'est pas similaire à l'un de la pluralité de parcours enregistrés candidats si l'emplacement actuel s'écarte de l'un de la pluralité de parcours enregistrés candidats.

12. Dispositif informatique selon l'une quelconque des revendications 9 à 11, dans lequel le fait que l'au moins un processeur est configuré pour désactiver et activer l'interface de dispositif d'entrée-sortie sans fil est basé en outre au moins en partie sur le fait que le parcours actuel partait ou non d'un même premier emplacement que celui du parcours enregistré.

13. Dispositif informatique selon la revendication 12, dans lequel l'au moins un processeur est configuré en outre :
pour enregistrer périodiquement un emplacement actuel ; et
pour déterminer si le parcours actuel partait ou non du même premier emplacement que celui du parcours enregistré en comparant le parcours enregistré à des emplacements qui ont été enregistrés périodiquement sur le parcours actuel dans le but de déterminer si le parcours actuel ramène au premier emplacement.

14. Dispositif informatique selon la revendication 12 ou la revendication 13, dans lequel l'au moins un processeur est configuré en outre pour déterminer le parcours actuel sur la base au moins en partie de changements d'orientation et d'accélération auxquels le dispositif est soumis après qu'il a quitté le premier emplacement, et
dans lequel l'au moins un processeur est configuré en outre pour déterminer l'orientation du dispositif sur la base de l'utilisation d'une caméra sur le dispositif dans le but de déterminer une attitude du dispositif par rapport à un utilisateur du dispositif, l'orientation étant corrigée sur la base de l'attitude et d'une direction de mouvement.

15. Dispositif informatique selon l'une quelconque des revendications 9 à 14, dans lequel le fait que l'au moins un processeur est configuré en outre pour désactiver et activer l'interface de dispositif d'entrée-sortie sans fil est basé en outre au moins en partie sur :
une détermination qu'un type de mouvement auquel le dispositif est soumis le long du parcours actuel est similaire à un type de mouvement enregistré associé au parcours enregistré ; ou
une détermination qu'une heure du jour estimée d'arrivée du dispositif au deuxième emplacement est similaire à une heure du jour associée à l'interaction utilisateur-dispositif antérieure.
